# EUROPEAN PATENT SPECIFICATION

(11) **EP 0 986 910 B1**
(45) Date of publication and mention of the grant of the patent: **14.08.2002**
(21) Application number: 98925263.0
(22) Date of filing: 05.06.1998
(51) Int. Cl.: H04N 7/167, H04N 7/16, H04N 5/00

(54) **CONDITIONAL ACCESS SYSTEM FOR SET-TOP BOXES**
BEDINGTES ZUGANGSSYSTEM FÜR SET TOP BOXEN
SYSTEME D'ACCES CONDITIONNEL POUR BOITIERS DE RACCORDEMENT

(30) Priority: 06.06.1997 US 48819 P
(43) Date of publication of application: 22.03.2000
(73) Proprietor: THOMSON CONSUMER ELECTRONICS, INC., Indianapolis, IN 46290-1024 (US)
(72) Inventor: ESKICIOGLU, Ahmet, Mursit, Indianapolis, IN 46250 (US); WEHMEYER, Keith, Reynolds, Fishers, IN 46038 (US); VIRAG, David, Emery, Indianapolis, IN 46254 (US)
(74) Representative: Kohrs, Martin
(86) International application number: US9811633
(87) International publication number: WO9856179

(56) References cited:
- EP-A- 0 438 154
- EP-A- 0 719 045
- EP-A- 0 817 485
- WO-A-97/38530
- OMURA J K: "NOVEL APPLICATIONS OF CRYPTOGRAPHY IN DIGITAL COMMUNICATIONS" IEEE COMMUNICATIONS MAGAZINE, vol. 28, no. 5, 1 May 1990, pages 21-29, XP000132493

## Description

### Field of the Invention

This invention concerns a system for providing conditional access (i.e., managing access) to a device, such as a "consumer electronic device". Examples of such consumer electronic devices include separate devices or "boxes" that may be located on top of, and coupled to a television receiver, i.e., set-top boxes.

### Background of the Invention

In general, conditional access involves limiting or controlling the communication with a device based on predetermined criteria. Conditional access may be achieved by connecting two devices together when communication therebetween is desired and by disconnecting the two devices from one another when such communication is no longer desired. However, in the context of today's sophisticated computer networks interconnected to form what is known as the world-wide web ("web"), many, if not all, of the devices designed to communicate with the web are "permanently" connected to the web through modem hookups or other means. That is, the devices usually remain physically connected to the web. Typically, access to the web is via a specially designed software package loaded onto a computer and a modem; this software enables a user to connect to an internet service provider who acts as the gate keeper to the web. The user typically pays a monthly fee to the service provider for access to the internet, either on a limited or unlimited basis. The proliferation of users who regularly access the web as a source of information or even as a means of communicating via E-Mail for both business and personal reasons has created a very competitive market for both service providers and the manufacturers of the necessary hardware. Thus, as one would expect there are numerous service providers, each requiring specialized software for access.

An outgrowth of today's emerging digital consumer electronic products is an opportunity to access the Internet from a user's television. Such access has been accomplished by utilizing the user's television as a monitor or display device in conjunction with a set-top box that provides the software (e.g., a web browser) and hardware (e.g., modem, ethernet, ADSL or any equivalent connection means) needed to interface to the web. For example, the RCA Network Computer manufactured by Thomson Consumer Electronics is such a set-top box that may be connected to both a television and a phone line or the like thereby permitting the user to access the web. Set-top boxes may provide a means for a variety of internet applications (e.g., electronic commerce) from the home, the office or any location without utilizing a personal computer or any general purpose computing device. These set-top boxes have open hardware architectures which would permit easy adaptation of the set-top box thereby permitting use with any of a plurality of service providers.

### Summary of the Invention

The manufacturers of these set-top boxes may desire that the box only be used with selected service providers. For example, the manufacturer of the box may be compensated by the service provider for each connection to the service from the box. Thus, the flexibility of the set-top box's open hardware architecture in combination with a competitive market for such devices necessitates the need to provide a system for providing conditional access in the set-top box so that the box can only connect to selected service providers. This invention resides, in part, in recognition of the described problem and, in part, in providing a solution to the problem.

Generally, the present invention, which is defined in its broadest aspects in claims 1, 10 and 11, defines a method for managing access to a device by sending a first message to a second device; receiving a digital certificate encrypted using a first private key; receiving the first message encrypted using a second private key; authenticating the second device; and establishing a communication channel between the devices.

In accordance with one aspect of the present invention, the first message comprises data associated with the first device and a date and time stamp, and the digital certificate comprises data associated with the second device and a second public key.

In accordance with another aspect of the present invention, the step of authenticating comprises decrypting the digital certificate using a first public key; decrypting the first encrypted message using the second public key to generate a first decrypted message; and comparing the first decrypted message to the first message.

In accordance with another aspect of the present invention, the method further comprises providing confirmation of the authentication to said second device by encrypting the first message using the second public key to generate a second encrypted message; and sending the second encrypted message to the second device.

In accordance with still another aspect of the present invention, the digital certificate, the first public and first private keys are issued by an independent certificate authority and are associated with the second device.

In accordance with yet another aspect of the present invention, a system for managing access between a service provider and a set-top box having a smart card coupled thereto, the set-top box sends a first message to the smart card; receives a smart card (first) digital certificate encrypted using a private key; authenticates the smart card; contacts the service provider and sends a second message to the service provider; receives a service provider (second) digital certificate encrypted using another private key; receives the second message encrypted using yet another private key; authenticates the service provider; provides confirmation to the service provider; and establishes a communication channel with the service provider. Particularly, the two messages contain at least set-top box identification data.

In accordance with yet another aspect of the present invention, the smart card includes service provider identification data associated with a plurality of service providers.

These and other aspects of the invention will be explained with reference to a preferred embodiment of the invention shown in the accompanying Drawings.

### Brief Description of the Drawings

Figure 1 is a block diagram of an exemplary implementation of a system for managing access to a device in accordance with the invention; and
Figure 2 is a flowchart diagram of an exemplary implementation of the conditional access system of Figure 1.
Figure 3 is a block diagram of an exemplary implementation of the system of Figure 1 wherein any one of a plurality of set-top boxes may communicate with any one of a plurality of service providers.

### Detailed Description of the Drawings

The present invention provides a conditional access system which may be utilized to obtain services from one of a plurality of sources. When implemented within a set-top box, the conditional access system permits the set-top box to authenticate the service provider and/or a smart card used to access services before a communication channel is established. Such a conditional access system may act as a toll bridge for access to services, thereby permitting a mechanism for the manufacturer of the set-top box to collect fees based on use of its set-top box.

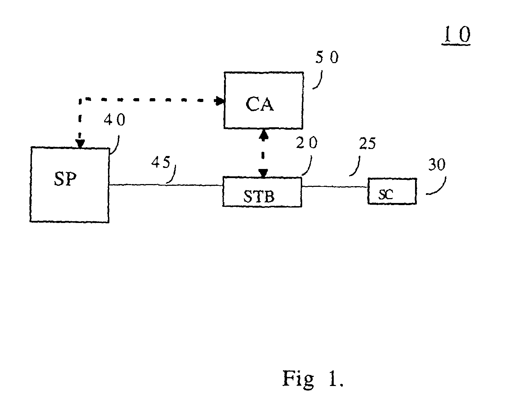

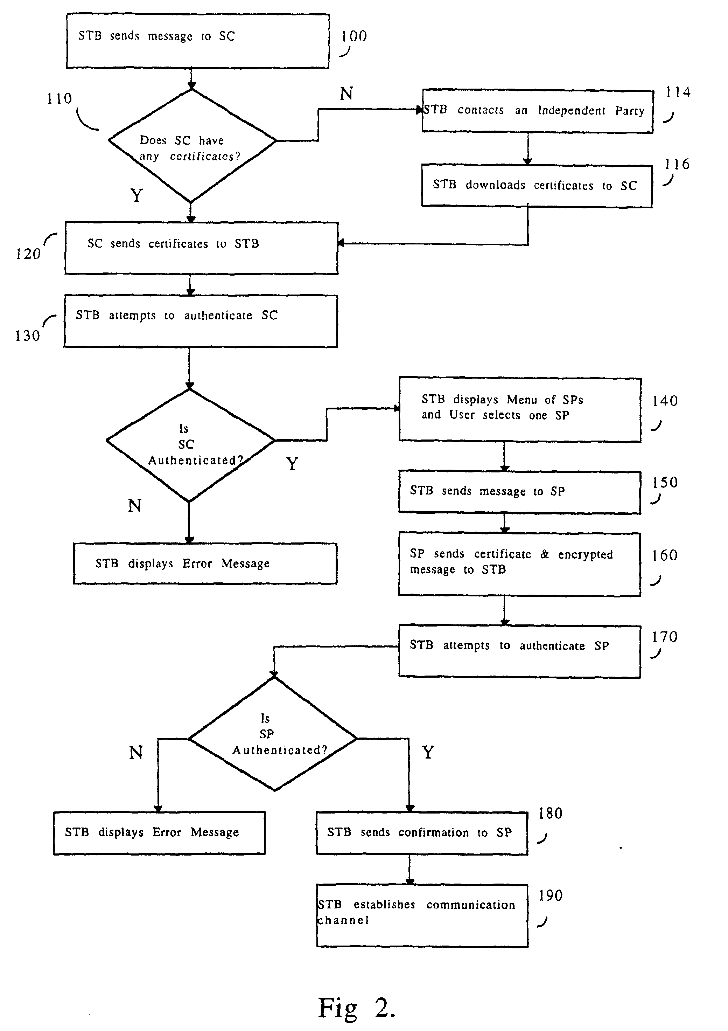

In Figure 1, the system 10 for managing access to a set-top box (STB) 20, for example, the RCA Network Computer, is depicted. Smart Card (SC) 30 is inserted into or coupled to a smart card reader (not shown) included in STB 20; an internal bus 25 interconnects STB 20 and SC 30 thereby permitting the transfer of data therebetween. Alternately, the functionality of the smart card may be embedded within the set-top box. STB 20 is connected to service provider (SP) 40 via a dial-up link or a direct link, which is depicted as element 45. Certificate Authority (CA) 50 is not directly connected to either SP 40 or STB 20 but issues digital certificates and public and private key pairs, which are used as explained below. These digital certificates are used by service providers and smart card manufacturers. It is within the scope of this invention that the digital certificates could be provided via an on-line connection. Further, it is within the scope of this invention that the role of Certificate Authority may be performed by SP 40 in collaboration with the manufacturer of the STB 20. The conditional access system of the present invention will be described in relation to system 10 as shown in Figure 1 and the flowchart diagram of Figure 2.

This conditional access system is based on authentication of each device (for example, SC 30 and SP 40) communicating with STB 20 prior to establishing a communication channel between a STB 20 and SP 40. Particularly, this conditional access system utilizes an asymmetric key system (i.e., public-key system), wherein only public keys are stored in the set-top box. That is, the set-top box does not store or contain any secrets (i.e., private keys). The foundation of public-key cryptography is the use of two related keys, one public and one private; the private key being computationally unfeasible of being deduced from the public key which is publicly available. Anyone with a public key can encrypt a message but only the person or device having the associated and predetermined private key can decrypt it. Similarly, a message can be encrypted by a private key- and anyone with access to the public key can decrypt that message. Encrypting messages using a private key may be referred to as "signing" because anyone holding the public key can verify that the message was sent by the party having the private key. This may be thought of as being analogous to verifying a signature on a document.

A digital certificate or certificate is a message sent in the clear (i.e., unencrypted) having a CA 50 signature attached thereto; thus the recipient of the certificate can verify the source or origin of the certificate. These digital certificates are in fact "signed messages" because the signature attached to the message is produced by encrypting either the message itself or a digest of the message (which is obtained by hashing the message, as described later). Unilateral authentication of each device connected to the set-top box is achieved by passing such certificates between the devices and verifying these certificates. Certificate verification involves checking the signature by decryption. These certificates may contain information used by the device receiving the certificate. This information may be related to a device not involved in the passing of this certificate, e.g. information contained in the first digital certificate is related to the service provider as described below. Further, the certificates may contain information associated with the device passing the certificate and a public key of the passing device.

As described above, only public keys are stored in a memory device contained in STB 20. Further, the first and second digital certificates, which may be issued by CA 50, are stored in SC 30 and SP 40, respectively.

The following nomenclature will be utilized in the below description of the present conditional access system.

| | |
|---|---|
| KCApri1 | Private key used to create SC's certificate |
| KCApub1 | Public key used to verify SC's certificate |
| KCApri2 | Private key used to create SP's certificate |
| KCApub2 | Public key used to verify SP's certificate |
| | |
| KSPpub | SP's Public key |
| KSPpri | SP's Private key |

These are used and discussed with respect to authenticating a device such as the smart card or the service provider.

After STB 20 is activated and SC 30 is inserted into STB 20, STB 20 sends a first message to SC 30 (see Figure 2, Step 100). This first message contains identification data corresponding to STB 20, for example, such identification data may include the manufacturer's identification data (MID). In response to the first message, SC 30 replies by sending a first digital certificate back to STB 20 (see Figure 2, Step 120). The first digital certificate (i.e., SC's certificate) includes data sent in the clear and an attached signature which is encrypted using KCApri1, the private key which is used to create certificates sent by SC 30. This data may include identification data corresponding to a selected service provider having a pre-existing agreement with the manufacturer of STB 20. Particularly, this data may also include, in addition to the service provider identification data, a phone number for the service provider which will be used for contacting the service provider as described below.

If SC 30 does not have a digital certificate associated with a service provider (see Figure 2, Step 110), STB 20 may contact an independent party (not shown), download an appropriate digital certificates from the independent party (see Figure 2, Step 114) and transfer them to SC 30 (see Figure 2, Step 116). STB 20 may contact the independent party utilizing an integrated modem. If the digital certificates are downloaded from the independent party, the above process may continue starting at the point where SC 30 replies to the first message by sending a first digital certificate back to STB 20.

Now, STB 20 must authenticate (see Figure 2, Step 130) SC 30 by verifying that SC 30 has passed a valid certificate to STB 20, this involves decrypting the first digital certificate in STB 20 using KCApubl. KCApubl, which is stored in STB 20, is the corresponding public key also assigned by CA 50. After SC 30 is authenticated, the service provider identification data included in the first digital certificate is used by STB 20 to contact the desired service provider, for example SP 40.

SC 30 may have more than one digital certificate, each one of which may identify a different service provider. If this is the case, the user may be prompted to select one of the service providers having a valid certificate (see Figure 2, Step 140). Further, if a service provider has more than one access number, the set-top box may select an alternate number if, for example, the primary number is busy.

STB 20 sends a second message to SP 40 (see Figure 2, Step 150); this second message contains similar identification data corresponding to STB 20. For example, such identification data now may include the manufacturer's identification data (MID) and a date and time stamp (DTS). DTS may be downloaded from an electronic program guide or from a special time server or possible through an internal means. In response to the second message, SP 40 replies by sending (1) a second digital certificate (i.e., SP's certificate) and (2) the second message encrypted using KSPpri back to STB 20 (see Figure 2, Step 160). The second digital certificate includes data sent in the clear and an attached signature which is created using KCApri2. This data may include identification data corresponding to the service provider, the validity period (VP) for the second digital certificate and the public key for SP 40, i.e., KSPpub. The identification data may also further include data associated with CA 50 which may be utilized, if necessary, for authentication of SP 40. Now SP 40 must be authenticated; such authentication is achieved utilizing the second digital certificate and the encrypted second message (see Figure 2, Step 170).

Particularly, authentication of the service provider involves (1) decrypting the second digital certificate in STB 20 using KCApub2, which is stored therein, (2) decrypting the encrypted second message using the public key of SP 40 (i.e., KSPpub) which is included in the second digital certificate and (3) comparing the decrypted "encrypted second message" to the original second message sent to SP 40. This ensures that the certificate was received from the desired service provider and not from another source.

Further, the data contained in the second digital certificate may be subjected to a one-way hashing algorithm, such as MD5 developed by Ron Rivest or SHA-1 developed by the National Institute of Standards and Technology (NIST) and the National Security Agency (NSA) prior to being encrypted by KCApri2. If this is the case, authentication may also include hashing the data sent in the clear using the same one-way hashing algorithm and comparing this data to the decrypted data. Similarly, the creation of the first digital certificate may involve the use of such a one-way hashing algorithm.

After SP 40 has been authenticated by STB 20, STB 20 sends confirmation of this authentication back to SP 40 (see Figure 2, Step 180). This confirmation involves sending the second message now being encrypted using the public key of SP 40, i.e., KSPpub, back to SP 40. SP 40 can decrypt this message using its associated private key, KSPpri. Finally, STB 20 establishes a communication channel (see Figure 2, Step 190) between STB 20 and SP 40 wherein all future communication may be handled utilizing public-key cryptography and the public and private key pairs associated with SP 40 (i.e. KSPpub and KSPpri).

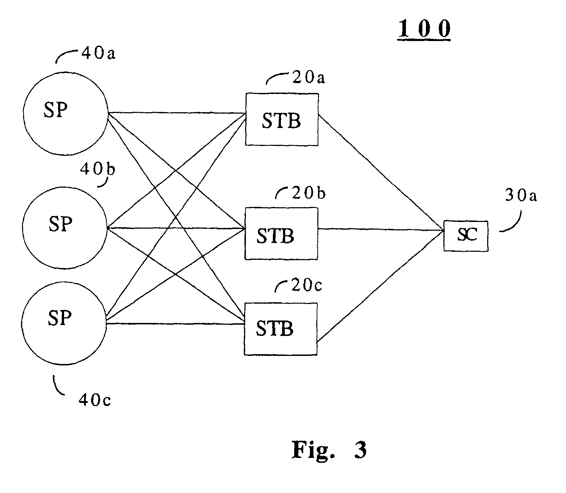

The present invention has been described in terms of an exemplary embodiment in which a single smart card cooperates with a single set-top box to manage access to a single service provider. However, it is within the scope of this invention to provide a conditional access system which may be extended to permit the smart card to "roam" across (i.e., provide conditional access between) multiple service providers and multiple manufacturers of the set-top boxes. This is particularly illustrated in Figure 3 where SC 30a may be used in any one of STBs 20a, 20b or 20c to access any one of SPs 40a, 40b or 40c. In such a system, each set-top box manufacturer will have a unique MID. The smart card will have a unique first digital certificate for each service provider and for each manufacturer having a predetermined agreement with the service provider. Each set-top box will have unique sets of public keys for verifying these digital certificates. For example, if there are "m" service providers and "n" manufacturers of set-top boxes then the smart card may contain up to "m times n" number of digital certificates.

While the invention has been described in detail with respect to numerous embodiments thereof, it will be apparent that upon a reading and understanding of the foregoing, numerous alterations to the described embodiment will occur to those skilled in the art and it is intended to include such alterations within the scope of the appended claims. Further, it is within the scope of the present invention that the conditional access system defined herein is fully capable of being utilized between any two devices interconnected.

## Claims

1. A method for managing access to a device, said method comprising:
(a) sending a first message from a first device to a second device;
(b) receiving, in said first device, from said second device a digital certificate encrypted using a first private key of said second device;
(c) receiving, in said first device, from said second device said first message encrypted using a second private key of said second device;
(d) authenticating said second device in response to said digital certificate and said first encrypted message; and
(e) establishing a communication channel between said first and said second devices in response to the authentication of said second device.

2. The method of Claim 1 wherein said first message comprises first identification data associated with said first device and a date and time stamp.

3. The method of Claim 2 wherein said digital certificate comprises second identification data associated with said second device and a second public key of said second device.

4. The method of Claim 3 wherein the step of authenticating comprises the steps of:
(a) decrypting said digital certificate in said first device using a first public key;
(b) decrypting said first encrypted message using said second public key to generate a first decrypted message; and
(c) comparing said first decrypted message to said first message.

5. The method of Claim 4 wherein said first public key is stored in said first device.

6. The method of Claim 5 further comprising the step of providing confirmation of the authentication to said second device by
(a) encrypting said first message using said second public key to generate a second encrypted message; and
(b) sending said second encrypted message to said second device.

7. The method of Claim 6 wherein said digital certificate, said first public key and said first private key are issued by an independent certificate authority and are associated with said second device.

8. The method of Claim 1 wherein said first device is a set-top box and said second device is a server associated with a service provider.

9. The method of Claim 8 wherein said second identification data further comprises data associated with said certificate authority and data associated with the validity of said digital certificate.

10. A method for managing access to a device, said method comprising:
(a) sending first identification data associated with a first device to a second device;
(b) receiving, in said first device, from said second device a digital certificate encrypted using a first private key of said second device, said digital certificate having second identification data associated with said second device and a second public key of said second device;
(c) encrypting said first identification data in said second device using a second private key associated with said second device to generate first encrypted identification data;
(d) receiving, in said first device, from said second device said first encrypted identification data;
(e) decrypting in said first device, using a first public key to obtain said second public key, said encrypted digital certificate received from said second device, said first public key being stored in said first device;
(f) decrypting said first encrypted identification data using said second public key to generate a first decrypted identification data;
(g) authenticating said second device by comparing said first decrypted identification data to said first identification data;
(h) sending to said second device second encrypted identification data, said second encrypted identification data being encrypted in said first device using said second public key of said second device; and
(i) establishing a communication channel between said first and said second devices.

11. A system for managing access between a service provider and a set-top box having a smart card coupled thereto, said set-top box performing the steps of:
(a) sending a first message to the smart card, said first message containing set-top box identification data;
(b) receiving from the smart card, in response to said first message, a first digital certificate encrypted using a first private key, said first digital certificate containing service provider identification data;
(c) authenticating the smart card in response to said first digital certificate;
(d) contacting the service provider in response to the authentication of the smart card and said service provider identification data and sending a second message to the service provider, said second message containing set-top box identification data;
(e) receiving from the service provider, in response to said second message, a second digital certificate encrypted using a second private key of said service provider;
(f) receiving from the service provider said second message encrypted using a third private key;
(g) authenticating the service provider in response to said second digital certificate and said second encrypted message;
(h) providing confirmation of the authentication to the service provider; and
(i) establishing a communication channel with the service provider in response to the authenticated service provider.

12. The system of Claim 11 wherein the smart card comprises a plurality of digital certificates, each one containing service provider identification data associated with a unique service provider.

13. The system of Claim 12 wherein the step of authenticating the smart card in response to said first digital certificate comprises decrypting said first digital certificate in said set-top box using a first public key.

14. The system of Claim 13 wherein said second digital certificate comprises second service provider identification data and a second public key of said service provider.

15. The system of Claim 14 wherein the step of authenticating the service provider comprises the steps of:
(a) decrypting said second digital certificate in the set-top box using said second public key;
(b) decrypting said encrypted second message using a third public key to generate a second decrypted message; and
(c) comparing said second decrypted message to said second message.

16. The system of Claim 15 wherein said first public key, said second public key, said first message and said second message are stored in said set-top box.

17. The system of Claim 16 wherein said first digital certificate, said first private key and said first public key are issued by an independent certificate authority.

18. The system of Claim 17 wherein said first digital certificate is stored in said smart card.

19. The system of Claim 18 wherein said second digital certificate, said second private key and said second public key are issued by an independent certificate authority and are associated with said service provider.

20. The system of Claim 19 wherein said second digital certificate is stored in said service provider.

## Patentansprüche

1. Verfahren zur Verwaltung des Zugriffs zu einem Gerät mit:
(a) Senden einer ersten Nachricht von einem ersten Gerät zu einem zweiten Gerät,
(b) Empfangen eines digitalen Zertifikats, das unter Anwendung eines ersten privaten Schlüssels des zweiten Gerätes verschlüsselt ist, in dem ersten Gerät von dem zweiten Gerät,
(c) Empfangen der ersten Nachricht, die unter Anwendung eines zweiten privaten Schlüssels des zweiten Gerätes verschlüsselt ist, in dem ersten Gerät von dem zweiten Gerät,
(d) Authentifizierung des zweiten Gerätes durch das digitale Zertifikat und die erste verschlüsselte Nachricht und
(e) Bilden eines Kommunikationskanals zwischen dem ersten und dem zweiten Gerät aufgrund der Authentifizierung des zweiten Geräts.

2. Verfahren nach Anspruch 1, wobei die erste Nachricht erste Identifikationsdaten, die zu dem ersten Gerät gehören, und eine Datums- und Zeitmarkierung enthält.

3. Verfahren nach Anspruch 2, wobei das digitale Zertifikat zweite Identifikationsdaten, die zu dem zweiten Gerät gehören, und einen zweiten öffentlichen Schlüssel des zweiten Gerätes enthält.

4. Verfahren nach Anspruch 3, wobei der Schritt der Authentifizierung folgende Schritte enthält:
(a) Entschlüsselung des digitalen Zertifikats in dem ersten Gerät durch Anwendung eines ersten öffentlichen Schlüssels,
(b) Entschlüsselung der ersten verschlüsselten Nachricht durch Anwendung des zweiten öffentlichen Schlüssels zur Erzeugung einer ersten entschlüsselten Nachricht und
(c) Vergleich der ersten entschlüsselten Nachricht mit der ersten Nachricht.

5. Verfahren nach Anspruch 4, wobei der erste öffentliche Schlüssel in dem ersten Gerät gespeichert ist.

6. Verfahren nach Anspruch 5 mit dem Schritt der Bestätigung der Authentifizierung zu dem zweiten Gerät durch
(a) Verschlüsseln der zweiten Nachricht durch Anwendung des zweiten öffentlichen Schlüssels zum Erzeugen einer zweiten verschlüsselten Nachricht und
(b) Senden der zweiten verschlüsselten Nachricht zu dem zweiten Gerät.

7. Verfahren nach Anspruch 6, wobei das digitale Zertifikat, der erste öffentliche Schlüssel und der erste private Schlüssel durch eine unabhängige Zertifikatsbehörde ausgegeben und dem zweiten Gerät zugeordnet werden.

8. Verfahren nach Anspruch 1, wobei das erste Gerät eine Set-Top-Box und das zweite Gerät ein Server ist, der einem Serviceanbieter zugeordnet ist.

9. Verfahren nach Anspruch 8, wobei die zweiten Identifikationsdaten außerdem Daten enthalten, die der Zertifikatsbehörde zugeordnet sind, und Daten enthalten für die Gültigkeit des digitalen Zertifikats.

10. Verfahren zur Verwaltung des Zugriffs zu einem Gerät mit folgenden Schritten:
(a) Senden der ersten Identifikationsdaten für ein erstes Gerät zu einem zweiten Gerät,
(b) Empfangen eines digitalen Zertifikats von dem zweiten Gerät in dem ersten Gerät, das unter Anwendung eines ersten privaten Schlüssels des zweiten Geräts verschlüsselt ist, wobei das digitale Zertifikat zweite Identifikationsdaten für das zweite Gerät und einen zweiten öffentlichen Schlüssel des zweiten Geräts aufweist,
(c) Verschlüsselung der ersten Identifikationsdaten in dem zweiten Gerät durch Anwendung eines zweiten privaten Schlüssels für das zweite Gerät, um erste verschlüsselte Identifikationsdaten zu erzeugen,
(d) Empfangen der ersten verschlüsselten Identifikationsdaten von dem zweiten Gerät in dem ersten Gerät,
(e) Entschlüsselung in dem ersten Gerät durch Anwendung eines ersten öffentlichen Schlüssels zur Erlangung des zweiten öffentlichen Schlüssels, des von dem zweiten Gerät empfangenen verschlüsselten digitalen Zertifikats, des in dem ersten Gerät gespeicherten öffentlichen Schlüssels,
(f) Entschlüsselung der ersten verschlüsselten Identifikationsdaten durch Anwendung des zweiten öffentlichen Schlüssels zur Erzeugung von ersten entschlüsselten Identifikationsdaten,
(g) Authentifizierung des zweiten Gerätes durch Vergleich der ersten entschlüsselten Identifikationsdaten mit den ersten Identifikationsdaten,
(h) Senden der zweiten verschlüsselten Identifikationsdaten, die in dem ersten Gerät verschlüsselt werden, zu dem zweiten Gerät unter Anwendung des zweiten öffentlichen Schlüssels des zweiten Geräts und
(i) Bildung eines Kommunikationskanals zwischen dem ersten und dem zweiten Gerät.

11. System zur Verwaltung des Zugriffs zwischen einem Serviceanbieter und einer Set-Top-Box mit einer damit verbundenen Smart Card, wobei die Set-Top-Box folgende Schritte durchführt:
(a) Senden einer ersten Nachricht zu der Smart Card, wobei die erste Nachricht Set-Top-Box-Identifikationsdaten enthält,
(b) Empfangen von der Smart Card, in Abhängigkeit von der ersten Nachricht, eines ersten digitalen Zertifikats, das unter Anwendung eines ersten privaten Schlüssels verschlüsselt ist, wobei das erste digitale Zertifikat Serviceanbieter-ldentifikationsdaten enthält,
(c) Authentifizierung der Smart Card aufgrund des ersten digitalen Zertifikats,
(d) Kontaktierung des Serviceanbieters aufgrund der Authentifizierung der Smart Card und der Serviceanbieter-ldentifikationsdaten und Senden einer zweiten Nachricht zu dem Serviceanbieter, wobei die zweite Nachricht Set-Top-Box-Identifikationsdaten enthält,
(e) Empfangen eines zweiten digitalen Zertifikats, das unter Anwendung eines zweiten privaten Schlüssels des Serviceanbieters verschlüsselt ist, von dem Serviceanbieter,
(f) Empfang von dem Serviceanbieter, wobei die zweite verschlüsselte Nachricht einen dritten privaten Schlüssel benutzt,
(g) Authentifizierung des Serviceanbieters aufgrund des zweiten digitalen Zertifikats und der zweiten verschlüsselten Nachricht,
(h) Lieferung einer Bestätigung der Authentifizierung zu dem Serviceanbieter, und
(i) Bildung eines Kommunikationskanals mit dem Serviceanbieter aufgrund des authentifizierten Serviceanbieters.

12. System nach Anspruch 11, wobei die Smart Card mehrere digitale Zertifikat enthält, von denen jedes Serviceanbieter-Identifkationsdaten für einen einzigen Serviceanbieter enthält.

13. System nach Anspruch 12, wobei der Schritt der Authentifizierung der Smart Card durch das erste digitale Zertifikat die Entschlüsselung des ersten digitalen Zertifikats in der Set-Top-Box durch Anwendung eines ersten öffentlichen Schlüssels enthält.

14. System nach Anspruch 13, wobei das zweite digitale Zertifikat zweite Serviceanbieter-Identifikationsdaten und einen zweiten öffentlichen Schlüssel des Serviceanbieters enthält.

15. System nach Anspruch 14, wobei der Schritt der Authentifizierung des Serviceanbieters folgende Schritte enthält:
(a) Entschlüsselung des zweiten digitalen Zertifikats in der Set-Top-Box durch Anwendung des zweiten öffentlichen Schlüssels,
(b) Entschlüsselung der verschlüsselten zweiten Nachricht durch Anwendung eines dritten öffentlichen Schlüssels, um eine zweite entschlüsselte Nachricht zu erzeugen, und
(c) Vergleich der zweiten entschlüsselten Nachricht mit der zweiten Nachricht.

16. System nach Anspruch 15, wobei der erste öffentliche Schlüssel, der zweite öffentliche Schlüssel, die erste Nachricht und die zweite Nachricht in der Set-Top-Box gespeichert sind.

17. System nach Anspruch 16, wobei das erste digitale Zertifikat, der erste private Schlüssel und der erste öffentliche Schlüssel durch eine unabhängige Zertifikatsbehörde ausgegeben werden.

18. System nach Anspruch 17, wobei das erste digitale Zertifikat in der Smart Card gespeichert ist.

19. System nach Anspruch 18, wobei das zweite digitale Zertifikat, der zweite private Schlüssel und der zweite öffentliche Schlüssel durch eine unabhängige Zertifikatsbehörde ausgegeben werden und dem Serviceanbieter zugeordnet sind.

20. System nach Anspruch 19, wobei das zweite digitale Zertifikat in dem Serviceanbieter gespeichert ist.

## Revendications

1. Procédé de gestion d'accès à un dispositif, ledit procédé comportant :
(a) l'envoi d'un premier message par un premier dispositif à un deuxième dispositif;
(b) la réception, dans ledit premier dispositif, en provenance dudit deuxième dispositif d'un certificat numérique crypté en utilisant une première clé privée dudit deuxième dispositif;
(c) la réception, dans ledit premier dispositif, en provenance dudit deuxième dispositif dudit premier message crypté en utilisant une deuxième clé privée dudit deuxième dispositif;
(d) l'authentification dudit deuxième dispositif en réponse audit certificat numérique et audit premier message crypté ; et
(e) l'établissement d'un canal de communication entre ledit premier et ledit deuxième dispositifs en réponse à l'authentification dudit deuxième dispositif.

2. Procédé selon la revendication 1, dans lequel le premier message comprend des premières données d'identification associées audit premier dispositif et une marque de date et d'heure.

3. Procédé selon la revendication 2, dans lequel ledit certificat numérique comporte des deuxièmes données d'identification associées audit deuxième dispositif et une deuxième clé publique dudit deuxième dispositif.

4. Procédé selon la revendication 3, dans lequel l'étape d'authentification comprend les étapes de:
(a) décryptage dudit certificat numérique dans ledit premier dispositif en utilisant une première clé publique;
(b) décryptage dudit premier message crypté en utilisant ladite deuxième clé publique pour générer un premier message décrypté; et
(c) comparaison dudit premier message décrypté audit premier message.

5. Procédé selon la revendication 4, dans lequel ladite première clé publique est mémorisée dans ledit premier dispositif.

6. Procédé selon la revendication 5 comportant en outre l'étape de confirmation de l'authentification dudit deuxième dispositif en
(a) cryptant ledit premier message en utilisant ladite deuxième clé publique pour générer un deuxième message crypté; et
(b) envoyant ledit deuxième message crypté audit deuxième dispositif.

7. Procédé selon la revendication 6, dans lequel ledit certificat numérique, ladite première clé publique et ladite première clé privée sont générés par un organe de certification indépendant et sont associés audit deuxième dispositif.

8. Procédé selon la revendication 1, dans lequel ledit premier dispositif est un décodeur et ledit deuxième dispositif est un serveur associé à un fournisseur de services.

9. Procédé selon la revendication 8, dans lequel lesdites deuxièmes données d'identification comprennent en outre des données associées audit organe de certification et des données associées à la validité dudit certificat numérique.

10. Procédé de gestion des accès à un dispositif, ledit procédé comportant:
(a) l'envoi à un deuxième dispositif de premières données d'identification associées à un premier dispositif;
(b) la réception dans ledit premier dispositif, en provenance dudit deuxième dispositif, d'un certificat numérique crypté en utilisant une première clé privée dudit deuxième dispositif, ledit certificat numérique comportant des deuxièmes données d'identification associées audit deuxième dispositif et une deuxième clé publique dudit deuxième dispositif;
(c) le cryptage desdites premières données d'identification dans ledit deuxième dispositif en utilisant une deuxième clé privée associée audit deuxième dispositif pour générer des premières données d'identification cryptées.
(d) la réception, dans ledit premier dispositif, en provenance dudit deuxième dispositif, desdites premières données d'identification cryptées
(e) le décryptage dans ledit premier dispositif, en utilisant une première clé publique pour obtenir ladite deuxième clé publique, dudit certificat numérique crypté reçu dudit deuxième dispositif, ladite première clé publique étant mémorisée dans ledit premier dispositif;
(f) le décryptage desdites premières données d'identification cryptées en utilisant ladite deuxième clé publique pour générer des premières données d'identification décryptées.
(g) l'authentification dudit deuxième dispositif en comparant lesdites premières données d'identification décryptées aux dites premières données d'identification;
(h) l'envoi audit deuxième dispositif de deuxièmes données d'identification cryptées, lesdites deuxièmes données d'identification cryptées étant cryptées dans ledit premier dispositif en utilisant ladite deuxième clé publique dudit deuxième dispositif; et
(i) l'établissement d'un canal de communication entre ledit premier et ledit deuxième dispositifs.

11. Système de gestion d'accès entre un fournisseur de services et un décodeur comportant une carte à puce connectée à celui-ci, ledit décodeur effectuant les étapes :
(a) d'envoi d'un premier message à la carte à puce, ledit premier message contenant des données d'identification du décodeur;
(b) de réception, en provenance de la carte à puce, en réponse audit premier message d'un premier certificat numérique crypté en utilisant une première clé privée, ledit premier certificat numérique contenant des données d'identification du fournisseur de services;
(c) d'authentification de la carte à puce en réponse audit premier certificat numérique;
(d) de contact du fournisseur de services en réponse à l'authentification de la carte à puce et aux dites données d'identification du fournisseur de services et d'envoi d'un deuxième message au fournisseur de services, ledit deuxième message contenant des données d'identification du décodeur ;
(e) de réception, en provenance du fournisseur de services, en réponse audit deuxième message, d'un deuxième certificat numérique crypté en utilisant une deuxième clé privée dudit fournisseur de service;
(f) de réception, en provenance du fournisseur de services, dudit deuxième message crypté en utilisant une troisième clé privée;
(g) d'authentification du fournisseur de services en réponse audit deuxième certificat numérique et audit deuxième message crypté;
(h) de confirmation de l'authentification au fournisseur de services; et
(i) d'établissement d'un canal de communication avec le fournisseur de services en réponse à l'authentification du fournisseur de services.

12. Système selon la revendication 11, dans lequel la carte à puce comporte une pluralité de certificats numériques, chacun contenant des données d'identification de fournisseur de services associées à un fournisseur de services unique.

13. Système selon la revendication 12, dans lequel l'étape d'authentification de la carte à puce en réponse audit premier certificat numérique comporte le décryptage dudit premier certificat numérique dans ledit décodeur en utilisant une première clé publique.

14. Système selon la revendication 13, dans lequel ledit deuxième certificat numérique comporte des deuxièmes données d'identification de fournisseur de services et une deuxième clé publique dudit fournisseur de services.

15. Système selon la revendication 14, dans lequel l'étape d'authentification du fournisseur de services comporte les étapes de:
(a) décryptage dudit deuxième certificat numérique dans le décodeur en utilisant ladite deuxième clé publique;
(b) décryptage dudit deuxième message crypté en utilisant une troisième clé publique pour générer un deuxième message décrypté; et
(c) comparaison dudit deuxième message décrypté audit deuxième message.

16. Système selon la revendication 15, dans lequel ladite première clé publique, ladite deuxième clé publique, ledit premier message et ledit deuxième message sont mémorisés dans ledit décodeur.

17. Système selon la revendication 16, dans lequel ledit premier certificat numérique ladite première clé privée et ladite première clé publique sont générées par un organe de certification indépendant.

18. Système selon la revendication 17, dans lequel ledit premier certificat numérique, est mémorisé dans ladite carte à puce.

19. Système selon la revendication 18, dans lequel ledit deuxième certificat numérique, ladite deuxième clé privée et ladite deuxième clé publique sont générés par un organe de certification indépendant et sont associés audit fournisseur de services.

20. Système selon la revendication 19, dans lequel ledit deuxième certificat numérique est mémorisé dans ledit fournisseur de services.
